# EUROPÄISCHE PATENTSCHRIFT

(11) **EP 1 771 984 B1**
(45) Veröffentlichungstag und Bekanntmachung des Hinweises auf die Patenterteilung: **21.11.2007**
(21) Anmeldenummer: 05769636.1
(22) Anmeldetag: 20.07.2005
(51) Int. Cl.: H04L 12/66, H04J 3/16

(54) **VERFAHREN ZUR TECHNOLOGIEÜBERGREIFENDEN FEHLERSCHUTZSCHALTUNG**
METHOD FOR CROSS-TECHNOLOGICAL FAULT PROTECTION SWITCHING
PROCEDE POUR CREER UN CIRCUIT DE CONTROLE D'ERREURS VALABLE POUR PLUSIEURS TECHNOLOGIES

(30) Priorität: 23.07.2004 DE 102004035778
(43) Veröffentlichungstag der Anmeldung: 11.04.2007
(73) Patentinhaber: NOKIA SIEMENS NETWORKS GMBH & CO. KG, 81541 München (DE)
(72) Erfinder: FRICKE, Andreas, 81245 München (DE); JÄGER, Hubert, 82049 Pullach (DE); POPESCU, Daphne, 81379 München (DE)
(86) Internationale Anmeldenummer: PCT/EP2005/053526
(87) Internationale Veröffentlichungsnummer: WO 2006/010731

(56) Entgegenhaltungen:
- US-A1- 2003 012 135
- US-A1- 2003 043 736
- US-A1- 2003 076 857

## Beschreibung

Die Erfindung betrifft ein Verfahren zur technologieübergreifenden Fehlerschutzschaltung gemäß dem Oberbegriff des Patentanspruches 1.

Zum Betrieb eines aus mehreren Übertragungsnetzen unterschiedlicher Übertragungstechnologien zusammengesetzten Übertragungssystems werden jeweils die innerhalb der verwendeten Übertragungstechnologie vorgesehenen Fehlerschutzschaltmechanismen zur Behebung von Leitungsunterbrechungen oder anderer Betriebsfehler eingesetzt. Hierbei bestehen die Übertragungssysteme beispielsweise aus einem ersten Übertragungsnetz, d.h. paketorientiertes Datenübertragungsnetz ausgestaltet ist, und mindestens einem zweiten Übertragungsnetz, das das Transportnetz, insbesondere als SDH-Ringübertragungsnetz, betrieben wird. Die Fehlerschutzschaltmechanismen sind auf die innerhalb des Übertragungsnetzes verwendeten paketorientierten oder rahmenorientierten Übertragungstechnologien, beispielsweise der Ethernet-Technologie gemäß dem Standard IEEE 802.3 oder der Synchronous Digital Hierachy (SDH)Technologie, beschränkt. Technologieübergreifende Fehlerschutzschaltmechanismen sind derzeit nicht bekannt.

Zwar können Fehlerschutzschaltmechanismen einer rahmenorientierten Übertragungstechnologie beispielsweise gemäß dem "Sub-Network Connection Protection" (SNCP) Verfahren in SDH für eine paketorientierte Übertragungstechnologie, beispielsweise der Ethernet-Übertragungstechnologie transparent betrieben werden, jedoch sind diese Fehlerschutzschaltmechanismen nur auf das jeweilige Übertragungsnetz bezogen und können nicht für Fehlerschutzschaltungen in der angrenzenden Übertragungstechnologie gemeinsam genutzt werden.

Aus der US 2003/076857 A1 ist beispielsweise ein Übertragungssystem bekannt, bei dem ein SONET/SDH-Übertragungsnetz mit einem "Internet Protocol" (IP)-Übertragungsnetz über eine Ethernet-Schnittstelleneinheit verbunden ist. Im SONET/SDH-Übertragungsnetz sind zur Fehlerschutzschaltung gemäß ITU-T standardisierte Verfahren wie das "Automatic Protection Switching (APS)"-Verfahren und das "Multiplex Section Protection (MST)"-Verfahren zur Realisierung einer "Line-Protection" vorgesehen. Insbesondere sind zwischen einer im SONET/SDH-Übertragungsnetz vorgesehenen SONET/SDH-Einheit und einer im IP-Übertragungsnetz vorgesehenen IP-Routereinheit eine erste zweite Übertragungsleitung vorgesehen, über welche eine 1 Gbps/10 Gbps Ethernet Datenübertragungsschnittstelle realisiert wird. Um im Fehlerfall ein Umschalten von der ersten Übertragungsleitung auf die zweite Übertragungsleitung zu be**wirken, wird jeweils ein spezielles IP-Datenpaket - K-**Datenpaket genannt - über die 1 Gbps/10 Gbps Ethernet Datenschnittstelle übertragenen, welches zur Steuerung des SONETbasierten "Automatic Protection Switching (APS)"-Verfahrens vorgesehen ist. Das Umschalten von der ersten auf die zweite Übertragungsleitung wird beispielsweise durch die SONET/SDH-Einheit basierend auf den Schutzschaltmechanismen ASP, MST der SONET/SDH-Technologie durchgeführt. Das K-Datenpaket wird hierzu über die Ethernet-Datenschnittstelle zwischen der SONET/SDH-Einheit und der IP-Routereinheit ausgetauscht. Die in dem K-Datenpaket enthaltenen K1- und K2-Bytes sind gemäß dem SONET/SDH-Übertragungsprotokoll formatiert und somit als Fehlerschutzparameter der SONET/SDH-Technologie ausgebildet.

Aus der US 2003/0012135 A1 ist ein Verfahren zur Fehlerschutzschaltung zur Verbindung eines ersten und zweiten auf der Ethernet-Technologie basierenden Übertragungssystems bekannt, bei dem zur Fehlerschutzschaltung im Ethernet-Übertragungsnetz beispielsweise das "Spanning Tree Protocol"-Verfahren Verwendung findet.

Ferner ist aus der US 2003/0043736 A1 ein Verfahren zur Fehlerschutzschaltung bekannt, bei dem das auf der SONET-Technologie basierende Fehlerschutzverfahren "Automatic Protection Switching" in einem Ethernet-basierten Kommunikati**onssystem verwendet wird, wobei hierzu SDH-basierte Fehler**schutzparametern über das Ethernet-Datenübertragungsprotokoll übertragen werden.

Somit werden zwar mehrere Fehlerschutzschaltmechanismen in Kombination nebeneinander eingesetzt, beispielsweise das "Fast Spanning Tree" (FST) Verfahren oder das "Resilient Packet Ring" (RPR) Verfahren, die der Ethernet-Technologie zuzuordnen sind, mit Fehlerschutzschaltmechanismen der SDH Technologie, z. B. das "Multiplex-Section Protection" (MSP) Verfahren oder das "Sub-Network Connection Protection" (SNCP) Verfahren, jedoch jeweils nur innerhalb der jeweiligen Übertragungstechnologie. Hierdurch wird zumindest abschnittsweise, d.h. an den Verbindungsstellen zwischen paketorientierter und rahmenorientierter Übertragungstechnologie, ein doppelter Fehlerschutz realisiert. Zur Realisierung einer derartigen "doppelten" Fehlerschutzschaltung werden die technologieabhängigen Fehlerschutzschaltungen an beiden Enden der jeweils zu schützenden Übertragungsstrecke vorgesehen. Diese führen teilweise zu Konfigurationen mit unnötig hoher Komplexität die hohe Kosten für Hard- und Software sowie für die Einrichtung und Pflege der geschützten Daten nach sich ziehen.

Aufgrund diesem enormen technischen Aufwand wurde bisher in derartigen Übertragungssystemen mit unterschiedlichen Übertragungstechnologien an den Technologieschnittstellen auf Fehlerschutzschaltmechanismen verzichtet oder bei der Kombination von verschiedenen Übertragungstechnologien immer unterschiedliche Verfahren zur Fehlerschutzschaltung an beiden Enden der zu schützenden Übertragungsstrecke doppelt vorgesehen.

Der Aufbau einer Verbindung zwischen einer Ethernet-Schnittstelle eines Digital Subscriber Line Access Multiplexers (DSLAM), der an ein zu einem SDH-Ringübertragungsnetz gehörenden zentralen Netzknoteneinrichtung angeschlossen ist, über ein SDH-Ringübertragungsnetz mit einem gemäß der Ethernet-Übertragungstechnologie realisierten Datenübertragungsnetz wird beispielsweise über ein redundante Ethernet-Netzknoten durchgeführt, wobei nur der erste redundante Ethernet-Netzknoten über das SDH-Ringübertragungsnetz mit dem DSLAM verbunden ist, d. h. es besteht keine redundante Verbindung zwischen dem ersten Ethernet-Netzknoten und dem DSLAM, auf dem im Fehlerfall die bestehende Datenverbindung umgeschaltet werden könnte. Um eine vollständige Schutzschaltung der betrachteten Datenverbindung über die vorhandenen Übertragungstechnologien hinweg zu ermöglichen, ist eine zusätzliche zweite Ethernet-Schnittstelle am DSLAM vorzusehen, die mit dem zweiten redundanten Ethernet-Netzknoten über das SDH-Ringübertragungsnetz verbunden ist.

Die Aufgabe der Erfindung ist darin zu sehen, ein neuartiges Verfahren zur Fehlerschutzschaltung in einem Übertragungssystem anzugeben, bei dem der Schutz einer Datenverbindung unter Verwendung eines vorhandenen Fehlerschutzschaltmechanismus technologieübergreifend durchgeführt werden kann. Die Aufgabe wird ausgehend von dem Oberbegriff des Patentanspruches 1 durch dessen kennzeichneten Merkmale gelöst.

Der wesentliche Vorteil der Erfindung ist darin zu sehen, dass die durch die Fehlerschutzschaltung der Ethernet-Technologie ermittelten Fehlerschutzparameter (FST) durch die bei der Synchronous Digital Hierachy (SDH) Technologie verwendete Fehlerschutzschaltung ausgewertet werden und abhängig davon die Fehlerschutzschaltung im Transportnetz durchgeführt wird. Vorteilhaft werden bei dem erfindungsgemäßen Verfahren somit die Fehlerschutzparameter des gemäß der Ethernet-Technologie vorliegenden Schutzmechanismus, z. B. dem "Generic Framing Procedure" (GFP) Verfahren gemäß der ITU-T Empfehlung G.7041 ausgewertet und dem Schutzschaltmechanismus der **SDH-Technologie** zur Verfügung gestellt, die anhand dieser Fehlerschutzparameter die erforderlichen technologieeigenen Schutzschaltmechanismen einleitet. Hierdurch wird die zu Zuverlässigkeit der Schutzschaltung erhöht und die Komplexität der technischen Realisierung der Schutzschaltmechanismen verringert.

Weiterhin vorteilhaft wird als paketorientierte Übertragungstechnologie die Ethernet-Technologie nach Standard IEEE 802.3 und als rahmenorientierte Übertragungstechnologie die Synchronous Digital Hierarchy Technologie verwendet, wobei das erste Übertragungsnetz als paketorientiertes Datenübertragungsnetz und das zweite Übertragungsnetz als Transportnetz, insbesondere als SDH-Ringübertragungsnetz, betrieben wird.

Weiter vorteilhafte Ausgestaltungen des erfindungsgemäßen Verfahrens sind den Unteransprüchen zu entnehmen.

Im folgenden werden Ausführungsbeispiele des erfindungsgemäßen Verfahrens anhand der beiliegenden Zeichnungen näher erläutert.

Hierbei zeigen:
- Figur 1: beispielhaft ein aus einem erste und zweiten Übertragungsnetz aufgebautes Übertragungssystem;
- Figur 2: beispielhaft in einer schematischen Darstellung eine mögliche Realisierung der technologieübergreifenden Fehlerschutzschaltung;
- Figur 3: eine alternative Realisierung der technologieübergreifenden Fehlerschutzschaltung innerhalb eines gemäß der Schutzschaltarchitektur "bi-directional self healing ring" ausgestaltetes SDH-Ringübertragungsnetz.

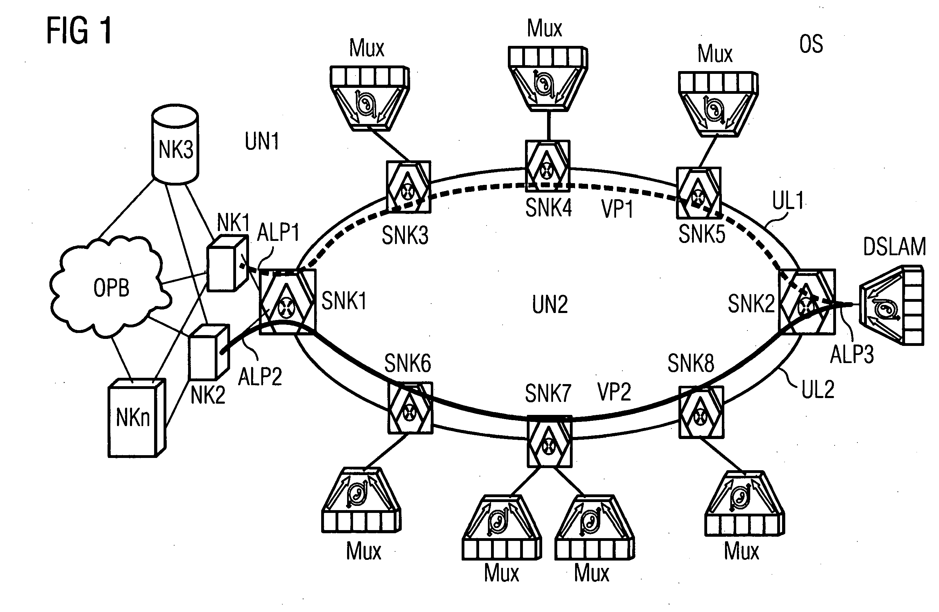

In Figur 1 ist in einer schematischen Darstellung ein Übertragungssystem OS dargestellt, dass beispielsweise aus einem ersten und zweiten Übertragungsnetz UN1, UN2 besteht. Das erste Übertragungsnetz UN1 ist als paketorientiertes Datenübertragungsnetz ausgestaltet, wobei als paketorientierte Übertragungstechnologie die Ethernet-Übertragungstechnologie nach Standard IEEE 802.3 verwendet wird. Ferner weist das erste Übertragungsnetz UN1 mehrere Netzknoten NK1 bis NKn auf, die beispielsweise zumindest einen Teil eines "optical packet backbone" Übertragungsnetzes OPB bilden.

Das zweite Übertragungsnetz UN2 ist als auf der rahmenorientierten Übertragungstechnologie basierendes Transportnetz, insbesondere als SDH-Ringübertragungsnetz, ausgestaltet, bei dem als rahmenorientierte Übertragungstechnologie die Synchronous Digital Hierarchy (SDH) Technologie zu Einsatz kommt. Das als SDH-Ringübertragungsnetz ausgestaltete zweite Übertragungsnetz UN2 weist im vorliegenden Ausführungsbeispiel erste bis achte SDH-Netzknoten SNK1 bis SNK8 auf, an die jeweils wiederum zumindest ein Multiplexer MÜX angeschlossen ist. Der erste bis achte SDH-Netzknoten SNK1 bis SNK8 sind jeweils über mindestens eine Übertragungsleitung UL1, UL2 verbunden und bilden eine Ringnetzstrukfur. Somit ist der erste SDH-Netzknoten SNK1 über eine erste Übertragungsleitung UL1 über den dritten, vierten und fünften SDH-Netzknoten SNK1 SNK3, SNK4, SNK5 mit dem zweiten SDH-Netzknoten SNK2 verbunden. Ferner ist der erste SDH-Netzknoten SNK1 über eine zweite Übertragungsleitung UL2 und über den sechsten, siebten und achten SDH-Netzknoten SNK6, SNK7, SNK8 mit dem zweiten SDH-Netzknoten SNK2 verbunden.

Der erste Netzknoten NK1 des ersten Übertragungsnetzes UN1 ist über ein erstes Anschlussleitungspaar ALP1 mit dem ersten SDH-Netzknoten SNK1 verbunden. Ferner ist der zweite Netzknoten NK2 des ersten Übertragungsnetzes UN1 über ein zweites Anschlussleitungspaar ALP2 an den ersten SDH-Netzknoten SNK1 angeschlossen. Der zweite SDH-Netzknoten SNK2 ist über ein drittes Anschlussleitungspaar ALP3 mit einem Digital Subscriber Line Access Multiplexer (DSLAM) verbunden.

Zum Aufbau einer Datenverbindung ausgehend vom dem an das zweite Übertragungsnetz UN2 angeschlossenen Digital Subscriber Line Access Multiplexer (DSLAM) über den ersten Netzknoten NK1 des ersten Übertragungsnetzes UN1 zu n-ten Netzknoten NKn des ersten Übertragungsnetzes UN1 über das Transportnetz UN2 wird ein erster Verbindungspfad VP1 bzw. "Arbeitsverbindungspfad" über die erste Übertragungsleitung UL1 aufgebaut. Zusätzlich zum ersten Verbindungspfad VP1 bzw. Arbeitsverbindungspfad wird ein zweiter Verbindungspfad VP2 bzw. "Ersatzverbindungspfad" vorgesehen, der über die zweite Übertragungsleitung UL2 und über den zweiten Netzknoten NK2 des ersten Übertragungsnetzes UN1 aufgebaut wird und auf den im Fehlerfall umgeschaltet werden kann. Der erste und zweite Verbindungspfad VP1, VP2 sind hierbei beispielsweise als bidirektionale Verbindungspfade ausgebildet, d.h. die Übertragung der Daten findet sowohl in Sende- als auch in Empfangsrichtung über denselben Verbindungspfad VP1, VP2 statt.

Alternativ kann das SDH-Ringübertragungsnetz bzw. das zweite Übertragungsnetz UN2 beispielsweise eine Schutzschaltarchitektur gemäß der "unidirectional self healing ring" (USHR) oder der "bi-directional self healing ring" (BSHR) Architektur aufweisen. Bei einer "unidirectional self healing ring" (USHR) Architektur werden bei der Übertragung der Daten über den "Arbeitsverbindungspfad" diese ausschließlich in einer Ringübertragungsrichtung, beispielsweise im Uhrzeigersinn über die erste und zweite Übertragungsleitung UL1 übertragen und die Übertragung der Daten über den "Ersatzverbindungspfad" findet in der gegensätzlicher Ringübertragungsrichtung, d.h. im Gegenuhrzeigersinn über eine dritte und vierte Übertragungsleitung - nicht dargestellt - statt. Bei einem "bi-directional self healing ring" (BSHR) findet die Übertragung der Daten sowohl in Sende- als auch in Empfangsrichtung über den "Arbeitsverbindungspfad" statt, wobei für Sende- und Empfangsrichtung zwei getrennte Übertragungsleitungen vorgesehen sind. Der "Ersatzverbindungspfad" weist keine Überlappung mit dem "Arbeitsverbindungspfad" auf und besteht analog zum "Arbeitsverbindungspfad" aus zwei für Sende- und Empfangsrichtung getrennt vorgesehene weitere Übertragungsleitungen.

Somit kann im Fehlerfall innerhalb des SDH-Ringübertragungsnetz bzw. des zweiten Übertragungsnetzes UN2 vom "Arbeitsverbindungspfad" VP1 auf den "Ersatzverbindungspfad" VP2 umgeschaltet werden, wobei eine Datenverbindung ausgehend von einer im Digital Subscriber Line Access Multiplexer DSLAM vorgesehenen Ethernetschnittstelle über das SDH-Ringübertragungssystem UN2 zum "optical packet backbone" Übertragungsnetz OPB der "Arbeitsverbindungspfad" und der "Ersatzverbindungspfad" nur über ein redundantes Paar von Ethernet-Netzknoten, im vorliegenden Ausführungsbeispiel dem ersten und zweiten Netzknoten NK1, NK2, aufgebaut werden kann. Dies bedeutet, dass nur jeweils einer der beiden Netzknoten NK1, NK2 vom Digital Subscriber Line Access Multiplexer (DSLAM) aus betrachtet direkt erreichbar und beim Auftreten eines Fehlers beispielsweise im ersten Netzknoten NK1 oder auf dessen ersten Anschlussleitungspaar ALP1 keine Fehlerschutzschaltung im SDH-Ringübertragungsnetz UN2 möglich ist, zumal die Fehlerschutzschaltung im SDH-Ringübertragungsnetzes UN2 von der Fehlerschutzschaltung des ersten paketorientierten Übertragungssystems UN1 entkoppelt ist.

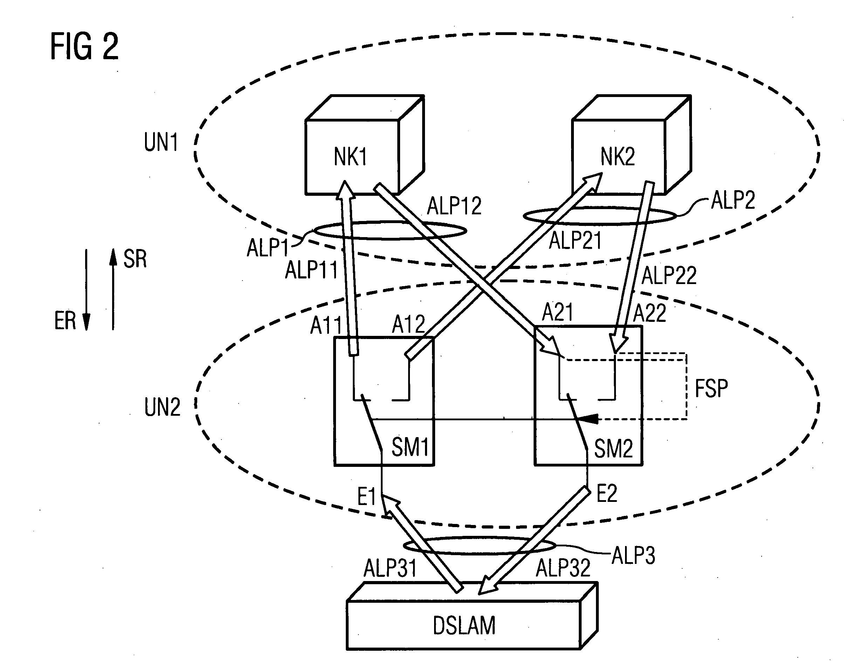

Figur 2 zeigt in einer schematischen Darstellung eine mögliche Ausgestaltung der technologieübergreifenden Fehlerschutzschaltung am Beispiel des in Figur 1 dargestellten Übertragungssystems OS. Hierbei wird das erste Übertragungsnetz UN1, das zweite Übertragungsnetz UN2 und der DSLAM gemäß Figur 1 nur schematisch zur Erläuterung des Fehlerschutzschaltungskonzeptes dargestellt. Das erste Übertragungsnetz UN1 weist den ersten Netzknoten NK1 und den zweiten Netzknoten NK2, die in paketorientierter Übertragungstechnologie betrieben werden, auf. Als paketorientierte Übertragungstechnologie wird die Ethernet-Technologie nach Standard IEEE 802.3 verwendet, d.h. der erste und zweite Netzknoten NK1, NK2 des ersten Übertragungsnetzes UN1 sind als "Ethernet-Switches" realisiert. Der erste Netzknoten NK1 ist über das erste Anschlussleitungspaar ALP1 an das zweite Übertragungsnetz UN2 bzw. den in Figur 1 dargestellten ersten SDH-Netzknoten SNK1 angeschlossen und der zweite Netzknoten NK2 ist analog hierzu über das zweite Anschlussleitungspaar ALP2 ebenso mit dem zweiten Übertragungsnetz UN2 verbunden. Im dargestellten Ausführungsbeispiel weisen das erste und zweite Anschlussleitungspaar ALP1, ALP2 jeweils erste und zweite Übertragungsleitungen ALP11, ALP12, ALP21, ALP22 zur Trennung von Sende- und Empfangsrichtung der Datenverbindung auf.

Im zweiten rahmenorientierten Übertragungssystem UN2 sind unter Verwendung der dort vorgesehenen Fehlerschutzschaltungsmechnanismen erste und zweite Schaltmittel SM1, SM2 vorgesehen, die beispielsweise unmittelbar im ersten SDH-Netzknoten SNK1 angeordnet sein können. Der erste Netzknoten NK1 ist über die erste Übertragungsleitung ALP11 des ersten Anschlussleitungspaares ALP1 in Senderichtung SR mit dem ersten Ausgang A11 des ersten Schaltmittels SM1 sowie über die zweite Übertragungsleitung ALP12 des ersten Anschlussleitungspaares ALP1 in Empfangsrichtung ER mit dem ersten Ausgang A21 des zweiten Schaltmittel SM2 des zweiten Übertragungsnetzes UN2 verbunden. Analog hierzu ist der zweite Netzknoten NK2 über die erste Übertragungsleitung ALP21 des zweiten Anschlussleitungspaares ALP2 in Senderichtung SR mit dem zweiten Ausgang A12 des ersten Schaltmittels SM1 sowie über die zweite Übertragungsleitung ALP22 des zweiten Anschlussleitungspaares ALP2 in Empfangsrichtung ER mit dem zweiten Ausgang A22 des zweiten Schaltmittel SM2 des zweiten Übertragungsnetzes UN2 verbunden.

Mit Hilfe des ersten und zweiten Schaltmittels SM1, SM2 wird zur technologieübergreifenden Fehlerschutzschaltung bei einem in erstem Netzknoten NK1 des ersten Übertragungsnetzes UN1 auftretenden Fehler die bestehende Datenverbindung auf den zweiten Netzknoten Nk2 des ersten Übertragungsnetzes UN1 umgeschaltet. Hierzu sind die beiden Schaltmittel SM1, SM2 derart miteinander synchronisiert, dass das Senderichtung SR analog und Empfangsrichtung ER gemeinsam geschaltet werden.

Hierdurch wird sichergestellt, dass nach der erfolgter Umschaltung von "Arbeitsverbindungspfad" auf den "Ersatzverbindungspfad" sowohl das in Senderichtung SR übertragene Datensignal als auch das in Empfangsrichtung ER übertragene Datensignal über denselben Ethernet-Switch, d.h. dem ersten oder zweiten Netzknoten NK1, NK2 des ersten Übertragungsnetzes UN1, geführt werden.

Zum Anschluss des DSLAM an das zweite Übertragungsnetz UN2 über das dritte Anschlussleitungspaar ALP3 ist der Eingang E1 des ersten Schaltmittels SM1 über beispielsweise den zweiten SDH-Netzknoten SNK2 und eine an diesen geführte erste Anschlussleitung ALP31 des dritten Anschlussleitungspaars ALP3 mit dem DSLAM zur Übertragung der Daten in Senderrichtung SR verbunden. Ferner ist der Eingang E2 des zweiten Schaltmittels SM2 über beispielsweise den zweiten SDH-Netzknoten SNK2 und eine an diesen geführte zweite Anschlussleitung ALP32 des dritten Anschlussleitungspaars ALP3 in Empfangsrichtung ER verbunden.

Zwischen dem DSLAM besteht technologieübergreifend eine Datenverbindung über das zweite Übertragungsnetz UN2 und über den ersten Netzknoten NK1 in das erste Übertragungsnetz UN1. Bei einem im ersten Netzknoten NK1 auftretenden Fehler wird mit Hilfe der im zweiten Übertragungsnetz UN2 vorhandenen Fehlerschutzschaltung über die ersten und zweiten Schaltmittels SM1, SM2 die Datenverbindung auf den zweiten, redundanten Netzknoten NK2 des ersten Übertragungsnetzes UN1 umgeschaltet und über diesen die Übertragung fortgesetzt. Zur Ermittlung des Vorliegens eines Fehlers werden die gemäß der rahmenorientierten Übertragungstechnologie realisierte Fehlerschutzschaltung im zweiten Übertragungsnetz UN2 abhängig von den Fehlerschutzparametern FSP des im ersten Übertragungsnetz UN1 vorliegenden paketorientierten Übertragungstechnologie gesteuert.

Zu Ermittlung der Steuerparameter werden die durch die Fehlerschutzschaltung der Ethernet-Übertragungstechnologie ermittelten Fehlerschutzparameter FSP, beispielsweise die gemäß dem Generic Framing Procedure (ITU-T G. 7041) ermittelt werden, durch die bei der Synchronen Digital Hierarchie (SDH) verwendeten Fehlerschutzschaltungssteuerung ausgewertet und abhängig davon die ersten und zweiten Schaltmittel SM1, SM2 im zweiten Übertragungsnetz UN2 d.h. im SDH-Ringübertragungsnetz durchgeführt. Die im der schematischen Darstellung gemäß Figur 2 vorgesehenen ersten und zweiten Schaltmittel SM1, SM2 können bevorzugt im ersten SDH-Netzknoten SNK1 realisiert sein und der Fehlerschutzschaltungsmechanismus gemäß der rahmenorientierten Übertragungstechnologie beispielsweise in Form des Sub-Network-Connection Protection Verfahrens oder des Multiplex-Section-Protection Verfahrens ausgestaltet sein.

Mit Hilfe eines punktiert gezeichneten Pfeiles wird die Auswertung gemäß dem Verfahren zur technologieübergreifenden Fehlerschutzschaltung der bei einem Fehler im ersten Netzknoten NK1 anzeigenden Fehlerschutzparameter FSP der paketorientierten Übertragungstechnologie angedeutet. Dabei werden durch die Synchrone Digital Hierarchy (SDH) Technologie zur Verfügung gestellte Fehlerschutzschaltungsmechanismen abhängig von den in der Ethernet-Übertragungstechnologie zur Verfügung gestellten Fehlerschutzschaltungsmechanismen bzw. deren Fehlerschutzparametern FSP gesteuert. Beispielsweise wird im ersten SDH-Netzknoten SNK1 das Generic Framing Procedere Signalisierungsignal "client signal fail" (gemäß ITU-T Standard G.7041) verwendet um eine Selektion der über die ersten und zweiten Schaltmittel SM1, SM2 geführten Verbindungspfade, d.h. Arbeits- oder Ersatzverbindungspfad VP1, VP2, vorzunehmen. Im ersten, auf der Ethernet-Übertragungstechnologie basierenden Übertragungsnetz UN1 wird beispielsweise das Spanning-Tree-Verfahren verwendet, um eine Auswahl der in Senderichtung SR angebotenen Datensignale vorzunehmen. Somit wird die bestehende 5DH-Fehlerschutzschaltung dahingehend erweitert, dass diese abhängig von dem Ethernet-Fehlerschutzparametern FSP gesteuert werden kann.

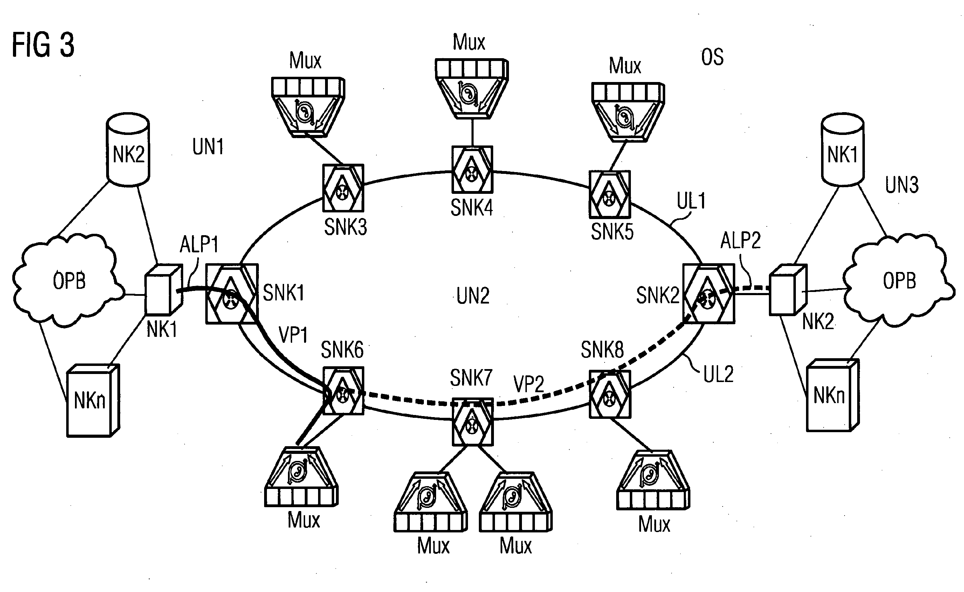

In Figur 3 ist eine alternative Ausführung des Verfahrens zur technologieübergreifenden Fehlerschutzschaltung am Beispiel des in Figur 1 dargestellten Ausführungsbeispiels gezeigt. Im Gegensatz zu dem in Figur 1 dargestellten optischen Übertragungssystem OS sind an das SDH-Ringübertragungsnetz UN2 ein erstes Übertragungsnetz UN1 und ein drittes Übertragungsnetz UN3, die gemeinsam das "optical packet backbone" Übertragungsnetz OPB bilden und in paketorientierter Übertragungstechnologie d.h. beispielsweise als Ethernet-Übertragungsnetz ausgestaltet sind, vorgesehen. Zusätzlich ist nur jeweils einer der Netzknoten NK1, NK2 des ersten Übertragungsnetzes UN1 bzw. des dritten Übertragungsnetzes UN3 mit einem SDH-Netzknoten SNK1, SNK2 des zweiten Übertragungsnetzes UN2 verbunden. Somit sind der erste und zweite Netzknoten NK1, NK2 des in Figur 1 dargestellten Ausführungsbeispiel getrennt voneinander in einem ersten und dritten Übertragungsnetz UN1, UN3 angeordnet. Der erste Netzknoten NK1 des ersten Übertragungsnetzes UN1 ist über ein erstes Anschlussleitungspaar ALP1 an den ersten SDH Netzknoten SNK1 und der zweite Netzknoten NK2 des dritten Übertragungsnetzes UN3 über ein zweites Anschlussleitungspaar ALP2 an den zweiten SDH Netzknoten SNK2 angeschlossen. Von dem an den sechsten SDH-Netzknoten SNK6 angeschlossenen Multiplexer MUX wird der Verbindungsaufbau in das "optical packet backbone" Übertragungsnetz OPB wiederum über einen Arbeits- und einen Ersatzverbindungspfad VP1, VP2 durchgeführt. Hierbei wird der Arbeitsverbindungspfad VP1 ausgehend vom den am sechsten SDH-Netzknoten SNK6 angeschlossenen Multiplexer MUX über den ersten SDH-Netzknoten SNK1 und den ersten Netzknoten NK1 des ersten Übertragungsnetzes UN1 in das "optical packet backbone" Übertragungsnetz OPB geführt. Der Ersatzverbindungspfad VP2 verläuft unabhängig davon vom den am sechsten SDH-Netzknoten SNK6 angeschlossenen Multiplexer MUX über den siebten, achten und zweiten SDH-Netzknoten SNK7, SNK8, SNK2 sowie den zweiten Netzknoten NK2 des dritten Übertragungsnetzes UN3 in das "optical packet backbone" Übertragungsnetz OPB. Hierbei handelt es ich um eine "bi-directional self healing ring" (BSHR) Architektur. In dieser Realisierung wird die erfindungsgemäße technologieübergreifende Fehlerschutzschaltung im sechsten SDH-Netzknoten SNK6 vorgesehen, d.h. die mit Hilfe von Figur 2 erläuterte Anordnung der ersten und zweiten Schaltmittel SM1, SM2, die abhängig von den Fehlerschutzparametern FSP gesteuert werden, ist beispielsweise im sechsten SDH-Netzknoten SNK6 analog integriert.

Das erfindungsgemäße Verfahren ist keinesfalls auf die genannten Ausführungsbeispiele beschränkt, sondern kann in unterschiedlichen Fehlerschutzschaltungszenarien, die eine Fehlerschutzschaltung zwischen rahmenorientierter und paketorientierten Übertragungstechnologien erfordern, eingesetzt werden.

## Patentansprüche

1. Verfahren zur technologieübergreifenden Fehlerschutzschaltung in einem aus mindestens einem ersten und zweiten Übertragungsnetz (UN1, UN2) bestehenden Übertragungssystems (OS), wobei im ersten und zweiten Übertragungsnetz (UN1, UN2) unterschiedliche Fehlerschutzschaltungen vorgesehen sind und das erste Übertragungsnetz (UN1) als paketorientiertes Datenübertragungsnetz gemäß der Ethernet-Technologie gemäß Standard IEEE 802.3 und das zweite Übertragungsnetz (UN2) als Tranportnetz gemäß der Synchronous Digital Hierachy (SDH) Technologie ausgebildet ist, wobei
die durch die Fehlerschutzschaltung der Ethernet-Technologie ermittelten Fehlerschutzparameter (FSP) durch die bei der Synchronous Digital Hierachy (SDH) Technologie verwendete Fehlerschutzschaltung ausgewertet werden und abhängig davon die Fehlerschutzschaltung im Transportnetz (UN2) durchgeführt wird.

2. Verfahren nach Anspruch 1,
**dadurch gekennzeichnet,**
**dass** das Transportnetz (UN2) als SDH-Ringübertragungsnetz ausgebildet wird.

3. Verfahren nach Anspruch 1 oder 2,
**dadurch gekennzeichnet,**
**dass** zur Fehlerschutzschaltung im paketorientiertes Datenübertragungsnetz das "Fast Spanning Tree" Verfahren oder das "Resilient Packet Ring" Verfahren verwendet werden.

4. Verfahren nach einem der Ansprüche 1 bis 3,
**dadurch gekennzeichnet,**
**dass** zur Fehlerschutzschaltung im Transportnetz das "Sub-Network Connection Protection" Verfahren oder das "Multiplex Section Protection" Verfahren verwendet werden.

5. Verfahren nach einem der Ansprüche 1 bis 4,
**dadurch gekennzeichnet,**
**dass** mindestens ein Verbindungsnetzknoten (SNK1) des Transportnetzes (UN2) mit einem ersten und zweiten Netzknoten (NK1, NK2) des paketorientierten Datenübertragungsnetzes (UN1) zur technologieübergreifenden Fehlerschutzschaltung verbunden wird, wobei eine Datenverbindung zwischen dem Transportnetz (UN2) und dem ersten und/oder dem zweiten Netzknoten (NK1, NK2) des paketorientierten Datenübertragungsnetz (UN1) über erste und zweite Schaltmittel (SM1, SM2) durchgeschaltet wird.

6. Verfahren nach Anspruch 5,
**dadurch gekennzeichnet,**
**dass** die Fehlerschutzschaltung bei einer von einem ersten paketorientierten Datenübertragungsnetz (UN1) über das Transportnetz (UN2) zu einem zweiten paketorientierten Datenübertragungsnetz (UN3) bestehenden Datenverbindung über die in einem Netzknoten (SNK6) des Transportnetzes (UN2) vorgesehene ersten und zweiten Schaltmittel (SM1, SM2) durchgeführt wird.

7. Verfahren nach Anspruch 6,
**dadurch gekennzeichnet,**
**dass** die Sende- und Empfangsrichtung (SR, ER) der Datenverbindung über getrennte Übertragungsleitungen (UL3, UL4) geführt werden.

8. Verfahren nach Anspruch 7,
**dadurch gekennzeichnet,**
**dass** die Daten der Datenverbindung über die ersten Schaltmittel (SM1) in Senderichtung (SR) und über die zweiten Schaltmittel (SM2) in Empfangsrichtung (ER) durchgeschaltet werden.

9. Verfahren nach einem der Ansprüche 5 bis 8,
**dadurch gekennzeichnet,**
**dass** bei einem Fehler im ersten Netzknoten (NK1) anzeigenden Fehlerschutzparameter (FSP) die über den ersten Netzknoten (NK1) geführte Datenverbindung durch gleichzeitiges Umschalten der ersten und zweiten Schaltmittel (SM1, SM2) auf den zweiten Netzknoten (NK2) umgeschaltet wird.

10. Verfahren nach einem der Ansprüche 1 bis 9,
**dadurch gekennzeichnet,**
**dass** als Fehlerschutzparameter (FSP) die Parameter des Generic Framing Procedure (GFP) Verfahrens gemäß der ITU-T Empfehlung G.7041 ausgewertet werden.

## Claims

1. Method for cross-technological fault protection switching in a transmission system (OS) comprising at least one first and one second transmission network (UN1, UN2), with different fault protection switching systems being provided in the first and the second transmission network (UN1, UN2) and the first transmission network (UN1) being embodied as a packet-oriented data transmission network in accordance with Ethernet technology as defined in Standard IEEE 802.3 und the second transmission network (UN2) being embodied as a transport network in accordance with the Synchronous Digital Hierarchy (SDH) technology, with
the fault protection parameters (FSP) determined by the fault protection switching circuit of the Ethernet technology being evaluated by the fault protection switching used in the Synchronous Digital Hierarchy (SDH) technology and fault protection switching being performed in the transport network (UN2) as a function of this evaluation.

2. Method according to claim 1,
**characterised in that**
the transport network (UN2) is embodied as an SDH ring transmission network.

3. Method according to claim 1 or 2,
**characterised in that**
the "Fast Spanning Tree" method or "Resilient Packet Ring" method is used for fault protection switching in the packet-oriented data transmission network.

4. Method according to one of the claims 1 to 3,
**characterised in that**
the" Sub-Network Connection Protection" method or the "Multiplex Section Protection" method is used for fault protection switching in the transport network.

5. Method according to one of the claims 1 to 4,
**characterised in that**
at least one connection network node (SNK1) of the transport network (UN2) is connected to a first and second network node (NK1, NK2) of the packet-oriented data transmission network (UN1) for cross-technological fault protection switching, with the data connection between the transport network (UN2) and the first and or the second network node (NK1, NK2) of the packet-oriented data transmission network (UN1) being through connected via first and second switching means (SM1, SM2).

6. Method according to claim 5,
**characterised in that**
the fault protection switching for a data connection from a first packet-oriented data transmission network (UN1) via the transport network (UN2) to a second packet-oriented data transmission network (UN3) is carried out via the first and second switching means (SM1, SM2) provided in a network node (SNK6) of the transport network (UN2).

7. Method according to claim 6,
**characterised in that**
the transmit and receive directions (SR, ER) of the data connection are routed over separate transmission lines (UL3, UL4) .

8. Method according to claim 7,
**characterised in that**
the data of the data connection is through-connected via the first switching means (SM1) in the transmit direction (SR) and via the second switching means (SM2) in the receive direction (ER).

9. Method according to one of the claims 5 to 8,
**characterised in that**,
for a fault protection parameter (FSP) indicating faults in the first network node (NK1) the switchover of the data connection routed via the first network node (NK1) is undertaken by simultaneous switchover of the first and second switching means (SM1, SM2) to the second network node (NK2).

10. Method according to one of the claims 1 to 9,
**characterised in that**
the parameters of the Generic Framing Procedure (GFP) method as defined in ITU-T Recommendation G.7041 are evaluated as fault protection parameters (FSP).

## Revendications

1. Procédé de commutation de protection contre les erreurs valable pour plusieurs technologies dans un système de transmission (OS) composé d'au moins un premier et un deuxième réseaux de transmission (UN1, UN2), différents circuits de commutation de protection contre les erreurs étant prévus dans les premier et deuxième réseaux de transmission (UN1, UN2) et le premier réseau de transmission (UN1) se présentant sous la forme d'un réseau de transmission de données orienté paquets selon la technologie Ethernet conforme au standard IEEE 802.3 et le deuxième réseau de transmission (UN2), sous la forme d'un réseau de transport selon la technologie «Synchronous Digital Hierarchy» (SDH), les paramètres de protection contre les erreurs (FSP) déterminés par le circuit de commutation de protection contre les erreurs de la technologie Ethernet étant évalués par le circuit de commutation de protection contre les erreurs utilisé dans la technologie «Synchronous Digital Hierarchy» (SDH) et la commutation de protection contre les erreurs étant effectuée en fonction de cela dans le réseau de transport (UN2).

2. Procédé selon la revendication 1, **caractérisé en ce que** le réseau de transport (UN2) se présente sous la forme d'un réseau de transmission en anneau SDH.

3. Procédé selon la revendication 1 ou 2, **caractérisé en ce que**, aux fins de la commutation de protection contre les erreurs dans le réseau de transmission de données orienté paquets, on utilise le procédé «Fast Spanning Tree» ou le procédé «Resilient Packet Ring».

4. Procédé selon l'une des revendications 1 à 3,
**caractérisé en ce que**, aux fins de la commutation de protection dans le réseau de transport, on utilise le procédé «Sub-Network Connection Protection» ou le procédé «Multiplex Section Protection».

5. Procédé selon l'une des revendications 1 à 4,
**caractérisé en ce qu'**au moins un noeud de réseau de liaison (SNK1) du réseau de transport (UN2) est relié à un premier et un deuxième noeuds de réseau (NK1, NK2) du réseau de transmission de données orienté paquets (UN1) aux fins de la commutation de protection contre les erreurs valable pour plusieurs technologies, une liaison de données étant transférée entre le réseau de transport (UN2) et le premier et/ou le deuxième noeud de réseau (NK1, NK2) du réseau de transmission de données orienté paquets (UN1) via des premiers et deuxièmes moyens de commutation (SM1, SM2).

6. Procédé selon la revendication 5, **caractérisé en ce que** la commutation de protection contre les erreurs, dans le cas d'une liaison de données allant d'un premier réseau de transmission de données orienté paquets (UN1) vers un deuxième réseau de transmission de données orienté paquets (UN3) en passant par le réseau de transport (UN2), est effectuée par l'intermédiaire des premiers et deuxièmes moyens de commutation (SM1, SM2) prévus dans un noeud de réseau (SNK6) du réseau de transport (UN2).

7. Procédé selon la revendication 6, **caractérisé en ce que** les dispositifs émetteur et récepteur (SR, ER) de la liaison de données passent par des lignes de transmission séparées (UL3, UL4).

8. Procédé selon la revendication 7, **caractérisé en ce que** les données de la liaison de données sont transférées via les premiers moyens de commutation (SM1) dans le sens de l'émission (SR) et via les deuxièmes moyens de commutation (SM2) dans le sens de la réception (ER).

9. Procédé selon l'une des revendications 5 à 8, **caractérisé en ce que**, étant donné un paramètre de protection contre les erreurs (FSP) indiquant une erreur dans le premier noeud de réseau (NK1), la liaison de données passant par le premier noeud de réseau (NK1) est commutée sur le deuxième noeud de commutation (NK2) par commutation simultanée des premiers et deuxièmes moyens de commutation (SM1, SM2).

10. Procédé selon l'une des revendications 1 à 9, **caractérisé en ce que** sont évalués, en tant que paramètres de protection contre les erreurs (FSP), les paramètres du procédé «Generic Framing Procedure» (GFP) selon la recommandation G.7041 de l'ITU-T.
